# EUROPEAN PATENT APPLICATION

(11) **EP 2 940 378 A1**
(43) Date of publication of application: **04.11.2015**
(21) Application number: 13868894.0
(22) Date of filing: 27.12.2013
(51) Int. Cl.: F21V 9/14, G02B 5/30

(54) **POLARIZED LIGHT DISPLAY DEVICE USING SHADOW**

(30) Priority: 28.12.2012 KR 20120157655
(71) Applicant: Choi, Uk, Gyeonggi-do Seongnam-si 463-812 (KR); Kim, Ju Won, Seoul 132-887 (KR)
(72) Inventor: Choi, Uk, Gyeonggi-do Seongnam-si 463-812 (KR); Kim, Ju Won, Seoul 132-887 (KR)
(74) Representative: Gulde & Partner
(86) International application number: PCT/KR2013/012352
(87) International publication number: WO 2014/104845

(57) **Abstract**

The present invention provides a polarized light display device that uses a shadow as display element to provide a unique display effect. The polarized light display device 1000 according to the first aspect of the present invention has a polarized light source 80 emitting a polarized light and an ornamental or sign member 51 positioned to be distanced from the polarized light source 80 which receives and transmits out the light from the polarized light source 80 therethrough and double-refracts the light transmitting therethrough. A polarization shadow projection means 60 on which a shadow of the ornamental or sign member 51 is projected is provided behind of the polarized light source 80. The shadow of the ornamental or sign member 51 projected on the polarization shadow projection means 60 shows color.

## Description

### Technical Field

The present invention relates to a polarized light display device using a shadow which provides an ornamental or sign member for ornament or sign and, also, provides a shadow of the ornamental or sign member as display elements and presents unique display effect that the ornamental or sign member and the shadow of the ornamental or sign member present colors.

### Background

Polarizing plate or polarizing film, etc. makes an incident light polarized. The polarization includes linear polarization, circular polarization and elliptical polarization. The general circular polarization means has linear polarization means and a phase difference plate for generating phase difference of quarter wave coupled with the linear polarization means.

If the polarized light is passed through a birefringence medium such as birefringent film, the passed light has different polarization directions according to the wavelengths.

A shadow is a dark region where light is obstructed by an object on the path of the light. Even though the light is transmitted through the object, the shadow happens behind of the object as long as the straight propagation of the light is obstructed. The shadow generally looks black even it is clear or vague.

A display device which uses the shadow for ornament or sign has not been found.

The shadow has a shape and can be used for an element for ornament or sign. When the shadow is used for display element for ornament or sign, it is desirable if the shadow presents color regardless of color property of a light source or of an object causing the shadow because it generates unique aesthetic effect. In this case, if the object causing the shadow is an ornament or a sign and shows color regardless of the color property of the light source or the shadow, it is preferable.

That is, if the element for ornament or sign is provided, the element for ornament or sign generates the shadow and the element for ornament or sign or the shadow presents color regardless of the color property of the light source, it generates unique aesthetic effect that has never been before. Generally, the light source is an illumination means emitting white light. Accordingly, it is possible to generate the unique aesthetic effect that the element for ornament or sign or the shadow shows color although the source light emits the white light.

Also, the shadow can show color regardless of the color property of the element for ornament or sign. For example, although the element for ornament or sign is transparent or translucent and colorless, the shadow presents color.

The present invention uses the polarization and provides a polarized light display device using a shadow which enables them.

### Detailed description of the invention

### The problem to be solved

The purpose of the present invention is to provide a polarized light device using a shadow where an ornamental or sign member is provided, a shadow is generated from the ornamental or sign member, and the shadow shows color regardless of color property of a light source or the ornamental or sign member or the ornamental or sign member shows color regardless of color property of the light source.

### Technical Solution

The present invention provides a polarized light display device comprising: a polarized light source having a light source and a first polarizing means positioned in front of the light source, so that a polarized light is emitted from the polarized light source; an ornamental or sign member positioned to be distanced from the polarized light source, receiving and transmitting the light emitted from the polarized light source through the ornamental or sign member, and double-refracting the light being transmitted through the ornamental or sign member; polarization shadow projection means that is positioned to be behind of and distanced from the ornamental or sign member along propagation direction of the light emitted from the polarized light source so that a shadow of the ornamental or sign member is formed on the polarization shadow projection means, and reflects and polarizes an incident light; wherein, the shadow of the ornamental or sign member formed on the polarization shadow projection means presents color, and display object includes the shadow of the ornamental or sign member presenting color.

According to the present invention, the polarization shadow projection means may have reflection means on which a shadow is formed and a second polarizing means disposed on the reflection means.

According to the present invention, the second polarizing means may be attached to reflection surface of the reflection means.

According to the present invention, it is desirable if polarization directions of the light arriving at the second polarizing means after the emission from the polarized light source and of the second polarizing means have a difference between 75° and 105°, preferably, have a difference of 90° (perpendicularity) or the polarization directions of the light arriving at the second polarizing means after the emission from the polarized light source and of the second polarizing means have a difference between - 15° and 15°, preferably, have a difference of 0° (parallel).

According to the present invention, the first polarizing means and the second polarizing means may be all linear polarizing means and, in this case, it is preferable if the relative angle between the polarization directions of the first polarizing means and the second polarizing means is up to a minimum quantity of light or a maximum quantity of light in connection with the light reflected from the polarization shadow projection means after the emission from the polarized light source and the incidence on the polarization shadow projection means.

According to the present invention, the first polarizing means and the second polarizing means may be all circular polarization means.

According to the present invention, it is preferable if the reflection means exhibits diffuse reflection.

According to the present invention, the ornamental or sign member may have a transparent member that has no birefringent property or little birefringent property, and a film member, a sheet member or a plate member that has birefringent property combined with the transparent member.

It is preferable if the birefringent medium of the ornamental or sign member is a cellophane film or a film, sheet or plate made of PP, PET or PP material.

According to the present invention, the polarized light display device of the present invention may further comprise moving means for moving the ornamental or sign member.

The present invention also provides a polarized light display device comprising: a light source; an ornamental or sign member positioned to be distanced from the light source; wherein the ornamental or sign member has a birefringent medium having a first side receiving a light emitted from the light source and a second side through which the light received by the first side is transmitted out, and a first polarizing means disposed on the first side of the birefringent medium and the first and the second sides of the birefringent medium can be a curved surface or a plane, polarization shadow projection means to which the light emitted from the light source, transmitted to the first polarizing means of the ornamental or sign member and transmitted out through the second side of the ornamental or sign member is transmitted, which is positioned to be distanced from the ornamental or sign member, on which a shadow of the ornamental or sign member caused by the light of the light source is projected, which polarizes and reflects an incident light, and which polarizes and reflects part of the light emitted from the light source and directly illuminated thereto into the second side of the ornamental or sign member; wherein, the shadow of the ornamental or sign member projected on the polarization shadow projection means and the first polarizing means of the ornamental or sign member present colors; display object includes a combination of the ornamental or sign member and the shadow of the ornamental or sign member projected on the polarization shadow projection means.

It is preferable if the polarization shadow projection means has reflection means on which the shadow is formed and a second polarizing means disposed on a front surface of the reflection means.

It is preferable if the second polarizing means is attached to reflection surface of the reflection means.

It is preferable if the reflection means exhibits diffuse reflection.

It is preferable if the polarized light display device of the present invention further comprises moving means for moving the ornamental or sign member.

The present invention also provides a polarized light display device comprising: a light source; an ornamental or sign member positioned to be distanced from the light source; wherein the ornamental or sign member has a birefringent medium having a first side receiving a light emitted from the light source and a second side through which the light received by the first side is transmitted out and a first polarizing means disposed on the first side of the birefringent medium and the first and the second sides of the birefringent medium can be a curved surface or a plane, polarization reflection means positioned to be distanced from the ornamental or sign member and reflecting and polarizing an incident light; wherein the polarization reflection means reflects and polarizes part of the light that is emitted from the light source and directly illuminated thereto into the second side of the birefringent medium of the ornamental or sign member, wherein, the first polarizing means of the ornamental or sign member present color, and display object includes the ornamental or sign member. According to the present invention, the polarization reflection means may have reflection means totally or partially reflecting an incident light and a second polarizing means disposed on front surface of the reflection means.

It is preferable if the second polarizing means is attached to reflection surface of the reflection means.

The polarized light display device may further comprise moving means for moving the ornamental or sign member.

The present invention also provides a polarized light display device comprising: a polarized light source having a light source and a first polarizing means positioned in front of the light source, so that a polarized light is emitted from the polarized light source; an ornamental or sign member positioned to be distanced from the polarized light source; wherein the ornamental or sign member has a birefringent medium having a first side receiving a light emitted from the polarized light source and a second side through which the light received by the first side is transmitted out, and a second polarizing means disposed on the first side of the birefringent medium, and the first and the second sides of the birefringent medium can be a curved surface or a plane, reflection means positioned to be distanced from the ornamental or sign member and reflecting an incident light; wherein the reflection means reflects a light emitted from the polarized light source and directly illuminated thereto to the second side of the birefringent medium of the ornamental or sign member, wherein, the second polarizing means of the ornamental or sign member presents color, and, display object includes the ornamental or sign member having the color provided by the color presented at the second polarizing means.

It is desirable if the reflection means is positioned behind of the ornamental or sign member along propagation direction of the light emitted from the polarized light source and on which a shadow of the ornamental or sign member caused by the light emitted from the polarized light source is projected, and the display object includes a combination of the ornamental or sign member and the shadow of the ornamental or sign member.

It is preferable if the reflection means exhibits diffuse reflection.

It is desirable if polarization directions of the light arriving at the second polarizing means after the emission from the polarized light source and of the second polarizing means have a difference between 75° and 105°, preferably, have a difference of 90° (perpendicularity) or the polarization directions of the light arriving at the second polarizing means after the emission from the polarized light source and of the second polarizing means have a difference between - 15° and 15°, preferably, have a difference of 0° (parallel).

It is desirable if the first polarizing means and the second polarizing means are all linear polarizing means and the relative angle between the polarization directions of the first polarizing means and the second polarizing means is up to a minimum quantity of light or a maximum quantity of light in connection with the light reflected from the polarization shadow projection means after the emission from the polarized light source and the incidence on the polarization shadow projection means.

According to the present invention, it is possible that the first polarizing means and the second polarizing means are circular polarizing means.

The polarized light display device according to the present invention may further comprise moving means for moving the ornamental or sign member.

The present invention also provides a polarized light display device comprising: a polarized light source having a light source and a first polarizing means positioned in front of the light source, so that a polarized light is emitted from the polarized light source; an ornamental or sign member positioned to be distanced from the polarized light source; wherein the ornamental or sign member has a birefringent medium having a first side receiving a light emitted from the polarized light source and a second side through which the light received by the first side is transmitted out and a second polarizing means disposed on the second side of the birefringent medium, and the first and the second sides of the birefringent medium can be a curved surface or a plane, shadow projection means positioned to be distanced from the ornamental or sign member and to which the light emitted from the polarized light source, transmitted to the first side of the ornamental or sign member and transmitted through the second polarizing means is transmitted so that a shadow of the ornamental or sign member caused by the light of the polarized light source is formed thereon; wherein, the shadow of the ornamental or sign member formed on the shadow projection means presents color, and, display object includes the shadow of the ornamental or sign member presenting the color.

It is desirable if the shadow projection means reflects an incident light and it reflects part of a light directly illuminated to the shadow projection means from the polarized light source to the second polarizing means of the ornamental or sign member, and the display object includes a combination of the ornamental or sign member and the shadow of the ornamental or sign member.

It is preferable if the shadow projection means exhibits diffuse reflection.

It is desirable if polarization directions of the light arriving at the second polarizing means reflected by the shadow projection means from the polarized light source and of the second polarizing means have a difference between 75° and 105°, preferably, have a difference of 90° (perpendicularity) or the polarization directions of the light arriving at the second polarizing means reflected by the shadow projection means from the polarized light source and of the second polarizing means have a difference between - 15° and 15°, preferably, have a difference of 0° (parallel)

According to the present invention, it is possible that the first polarizing means and the second polarizing means are circular polarizing means.

It is preferable if the polarized light display device of the present invention further comprises moving means for moving the ornamental or sign member.

The present invention also provides polarized light display device comprising: a polarized light source having a light source and a first polarizing means positioned in front of the light source, so that a polarized light is emitted from the polarized light source; an ornamental or sign member positioned to be distanced from the polarized light source; wherein the ornamental or sign member has a second polarizing means having a first side receiving the light emitted from the polarized light source and a second side through which the light received by the first side is transmitted out, a first birefringent medium disposed on the first side of the second polarizing means, and a second birefringent medium disposed on the second side of the second polarizing means, and the first and the second sides of the birefringent media can be a curved surface or a plane, shadow projection means which is positioned to be distanced from the ornamental or sign member, to which the light emitted from the polarized light source, transmitted to the first birefringent medium of the ornamental or sign member and transmitted out through the second polarizing means and the second birefringent medium is transmitted so that a shadow of the ornamental or sign member caused by the polarized light source is projected thereon, which reflects an incident light, and which reflects part of the light emitted from the polarized light source and directly illuminated thereto into the second birefringent medium of the ornamental or sign member; wherein, the shadow of the ornamental or sign member projected on the shadow projection means and the second polarizing means of the ornamental or sign member present colors, and, display object includes a combination of the ornamental or sign member and the shadow of the ornamental or sign member.

It is preferable if reflection surface of the shadow projection means exhibits diffuse reflection.

It is preferable if the polarized light display device of the present invention further comprise moving means for moving the ornamental or sign member.

The present invention also provides a polarized light display device comprising: a polarized light source having a first light source and a first polarizing means positioned in front of the light source, so that a polarized light is emitted from the polarized light source; a second light source provided when the polarized light source is turned off; an ornamental or sign member positioned to be distanced from the polarized light source and the second light source; wherein, the ornamental or sign member has a birefringent medium having a first side receiving the light from the polarized light source or the second light source and a second side through which the light received by the first side is transmitted out and a second polarizing means disposed on the first side of the birefringent medium, and the first and second sides of the birefringent medium can be a curved surface or a plane, polarization shadow projection means which is positioned to be distanced from the ornamental or sign member behind of the ornamental or sign member along propagation direction of the light from the polarized light source or the second light so that a shadow of the ornamental or sign member caused by the light from the polarized light source or the second light is projected thereon, which reflects and polarizes an incident light and which reflects part of the light illuminated thereto from the polarized light source or the second light to be polarized and directed into the second side of the birefringent medium of the ornamental or sign member, wherein, the shadow of the ornamental or sign member and the second polarizing means of the ornamental or sign member present colors, and display object includes a combination of the ornamental or sign member and the shadow of the ornamental or sign member.

It is desirable if the second light source is a natural light.

It is preferable if the polarization shadow projection means has reflection means on which the shadow is formed and a third polarizing means on front surface of the reflection means. It is preferable if the third polarizing means is attached to reflection surface of the reflection means.

It is preferable if the reflection means exhibits diffuse reflection.

It is preferable if the polarized light display device of the present invention further comprises moving means for moving the ornamental or sign member.

The present invention provides a polarized light display device comprising: a polarized light source having a light source and a first polarizing means positioned in front of the light source, so that a polarized light is emitted from the polarized light source; an ornamental or sign member positioned to be distanced from the polarized light source; wherein, the ornamental or sign member has a first birefringent medium having a first side receiving the light from the polarized light source and a second side through which the light received by the first side is transmitted out, and a second polarizing means disposed on the second side of the first birefringent medium, and the first and second sides of the first birefringent medium can be a curved surface or a plane, shadow projection means which is positioned to be distanced from the ornamental or sign member, to which the light emitted from the polarized light source, transmitted to the first side of the ornamental or sign member and transmitted out through the second polarizing means is transmitted so that a shadow of the ornamental or sign member caused by the polarized light source is projected thereon, which reflects part of the light emitted from the polarized light source and directly illuminated thereto into the second polarizing means of the ornamental or sign member, and which has a reflection means and a second birefringent medium disposed on front surface of the reflection means; wherein, the shadow of the ornamental or sign member projected on the shadow projection means and the second polarizing means of the ornamental or sign member present colors, and, display object includes a combination of the ornamental or sign member and the shadow of the ornamental or sign member.

It is possible for the polarized light display device of the present invention further comprises moving means for moving the ornamental or sign member.

The present invention provides a polarized light display device comprising: a polarized light source having a light source and a first polarizing means positioned in front of the light source, so that a polarized light is emitted from the polarized light source; an ornamental or sign member positioned to be distanced from the polarized light source, receiving and transmitting out the polarized light from the polarized light source therethrough and double-reflecting the light being transmitted therethrough; shadow projection means positioned to be distanced from the ornamental or sign member, on which a shadow of the ornamental or sign member caused by the light from the polarized light source is projected and which reflects an incident light; a second polarizing means positioned between the ornamental or sign member and the reflection means along propagation direction of the light from the polarized light source; wherein, the shadow of the ornamental or sign member projected on the shadow projection means presents color, and, display object includes the shadow of the ornamental or sign member presenting color.

It is preferable if the second polarizing means is attached to the ornamental or sign member or to the shadow projection means.

### Advantageous Effects

The present invention provides a polarized light display device using a shadow presenting unique display effect. According to the present invention, an ornamental or sign member and shadow thereof are provided as display elements and the display elements show colors. The shadow of the ornamental or sign member shows color regardless of color property of a light source or of the ornamental or sign member. The ornamental or sign member shows color regardless of color property of the light source.

Broadly viewed, the present invention introduces seven aspects. Some of the aspects do not generate the shadow or do not present color on the shadow. However, in these cases, the ornamental or sign member is presented with color regardless of the color property of the light source.

According to the present invention, movement means for moving the ornamental or sign member can be provided so that the ornamental or sign member makes a movement like rotation or swing. In this case, the colors of the shadow of ornamental or sign member and of the ornamental or sign member change according to the movement thereof.

### Brief description of the drawings

Fig. 1 is a view showing a polarized light display device using a shadow according to the first aspect of the present invention;
Fig. 2 is a view showing an example of the display of Fig. 1;
Fig. 3 is a view showing a polarized light display device using a shadow according to the second aspect of the present invention;
Fig. 4 is a view showing a polarized light display device using a shadow according to a variation of the second aspect of the present invention;
Fig. 5 is a view showing a polarized light display device using a shadow according to the third aspect of the present invention;
Fig. 6 is a view showing a polarized light display device using a shadow according to the fourth aspect of the present invention;
Fig. 7 is a view showing a polarized light display device using a shadow according to the fifth aspect of the present invention;
Fig. 8 is a view showing a polarized light display device using a shadow according to the sixth aspect of the present invention;
Fig. 9 is a view showing a polarized light display device using a shadow according to the ninth aspect of the present invention;

### Mode for invention

The embodiments of the present invention are explained with reference to the accompanying drawings.

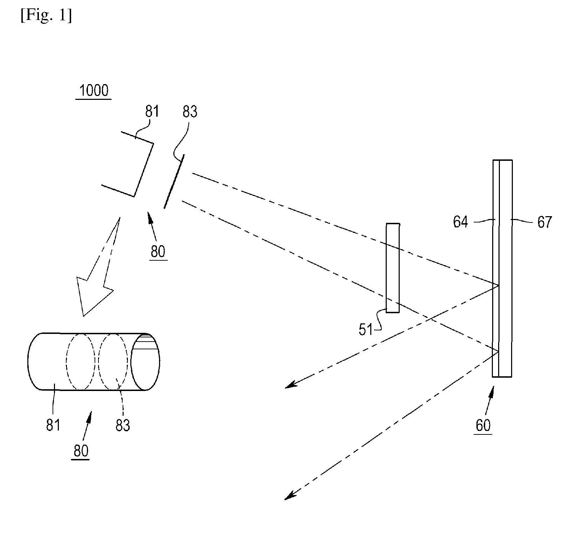

Fig. 1 shows a polarized light display device using a shadow 1000 according to the first aspect of the present invention.

According to the present invention, a polarized light source 80 is provided. The polarized light source 80 has a light source 81 and a first polarizing means 83 positioned in front of the light source 81 to emit a polarized light.

For example, the polarized light source 80 has the light source 81 emitting a light disposed inside of a cylinder body and the first polarizing means 83 such as a polarizing plate or a polarizing film positioned in front of the light source 81. The light emitted from the light source 81 is polarized as it passes through the first polarizing means 83 and the polarized light is emitted.

According to the present invention, an ornamental or sign member 51 is provided. The ornamental or sign member 51 is positioned on the path of the light emitted from the polarized light source 80 and distanced from the polarized light source 80. The light from the polarized light source 80 is received by and transmitted through the ornamental or sigh member 51. The ornamental or sign member 51 is made of a birefringent medium.

The ornamental or sign member 51 is used for ornament or for sign that gives information according to the purpose of display. For example, the ornamental or sign member 51 has a shape of pattern or logo or a shape of brand or letter to be used as the ornament or the sign. The ornamental or sign member 51 may have a plurality of elements. For example, it has a plurality of letters and/or a plurality of logos, which forms the brand. These letters and/or logos or some of them can constitute the ornamental or sign member 51.

The ornamental or sigh member 51 can be arranged in a specific position in a space by holding means, for example, in such a way that it is hung by a string.

Also, according to the present invention, polarization shadow projection means 60 is provided.

The polarization shadow projection means 60 is the means wherein a shadow can be formed thereon and a reflected light therefrom after the incidence of the light thereon is polarized. The reflected light can be totally polarized or partially polarized.

For example, in a case of a sheet glass, a shadow can be formed thereon. An incident light thereon is partially refracted to transmit through it, and partially reflected and polarized. Accordingly, the sheet glass can be the polarization shadow projection means 60. In a case of a surface member that is made of crystal, acrylic or a plastic and through which a light transmits, a shadow can be formed thereon. An incident light thereon is partially refracted to transmit through it, and partially reflected and polarized. Accordingly, the surface member can be the polarization shadow projection means 60. Here, the surface member refers to a member on the side of which a light is incident a surface is formed. The surface may be curved as well as it is a plane. Also, liquid such as water can be the polarization shadow projection means 60 because a shadow can be formed thereon and the reflected light therefrom is polarized.

According to the present invention, the polarization shadow projection means 60 can be built by providing reflection means 67 which reflects an incident light and on the surface of which a shadow can be formed and by arranging a second polarizing means 64 on the front surface of the reflection means 67. In this case, a shadow can be formed on the reflection means 67 and an incident light is polarized by the second polarizing means 64 as it is reflected.

Any means on which a shadow can be formed is enough for the reflection means 67. In many cases, the reflection means 67 exhibits diffuse reflection. However, it is not limited thereto. For example, a glass, an acrylic sheet, metal sheet or a plastic sheet can be the reflection means 67. Also, the reflection means 67 may have a base member and a metal material coated or plated on the base member, or, may have a base member and a metal film attached to the base member. The base member can be made of a plastic or a paper board or a paper. The polarization shadow projection means 60 may have the reflection means 67 and a polarization film provided for the second polarizing means 64, which is attached to the reflection means 67. Meanwhile, a specular reflection means such as a mirror can be the reflection means 67 because a shadow can be formed on it.

If an image reflected on the mirror is overlapped with a shadow, color of the shadow is shown on the image if the shadow presents color according to the present invention. In some cases, there is reflection means where the image and the shadow can be separately presented. This reflection means can also be the reflection means 67 of the polarization shadow projection means 60 because the shadow is formed thereon.

According to the present invention, the polarization shadow projection means 60 is positioned behind of the ornamental or sign member 51 along the propagation direction of the light from the polarized light source 80 and distanced from the ornamental or sign member 51 so that the shadow of the ornament or sign member 51 caused by the light of the polarized light source 80 is projected on the polarization shadow projection means 60 and the polarization shadow projection means 60 reflects and polarizes the incident light. The polarization shadow projection means 60 can be provided on a wall. In other case, a wall can constitute the reflection means 67 and the second polarizing means such as the polarization film is attached thereto.

According to the present invention, the light emitted from the polarized light source 80 transmits through the ornamental or sign member 51, and the shadow is projected on the polarization shadow projection means 60. The shadow projected on the polarization shadow projection means 60 presents color.

That is, the shadow of the ornamental or sign member 51 is formed on the polarization shadow projection means 60 and the shadow presents color regardless of the color property of the ornamental or sign member 51.

For example, even if the ornamental or sign member 51 is colorless transparent or colorless translucent, the shadow shows color.

According to the first aspect of the present invention, the colored shadow of the ornamental or sign member 51 on the polarization shadow projection means 60 is a display element. The ornamental or sign member 51 can also be a display element along with the shadow. That is, only the colored shadow of the ornamental or sign member 51 on the polarization shadow projection means 60 can be used as the display element but also it can be used as the display element along with the ornamental or sign member 51.

According to the first aspect of the present invention, the shape of the shadow is determined by the shape of the ornamental or sign member 51 and the shadow having such a shape is colored regardless of the color of the light of the polarized light source 80 or the color of the ornamental or sign member 51.

As light emitted from the polarized light source 80 transmits through the ornamental or sign member 51, it becomes the light having different polarization directions according to the wavelengths. This light of different polarization directions according to the wavelengths is incident on the polarization shadow projection means 60 and reflected to be polarized so that some wavelength parts of the light are reflected while other wavelength parts of the light are not reflected in accordance with the polarization according to the wavelength and the polarization according to the reflection. The reflected wavelength parts of the light present color.

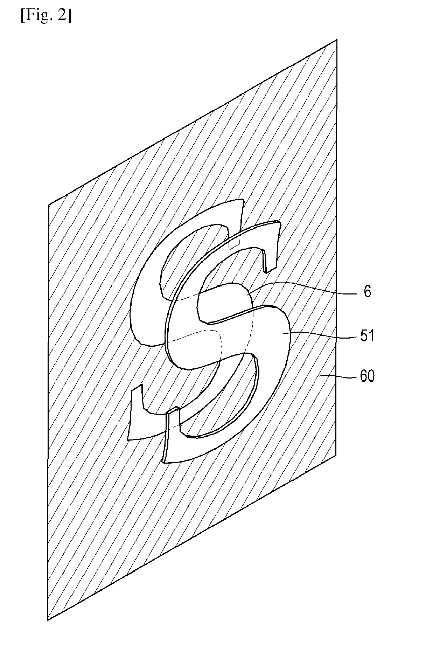

Fig. 2 shows that the ornamental or sign member 51 which is S-shaped and colorless transparent is provided and the polarization shadow projection means 60 is provided behind of it. The shadow of the ornamental or sign member 51 is formed on the polarization shadow projection means 60 and it presents color.

According to the present invention, it is desirable if the polarization directions of the light arriving at the second polarizing means 64 after the emission from the polarized light source 80 and of the second polarizing means 64 have a difference between 75° and 105°, preferably, have a difference of 90° (perpendicularity).

If the second polarizing means 67 is located on the straight propagation path of the first polarizing means 83, it means that the polarization directions of the first polarizing means 83 and of the second polarizing means 67 have a difference of 90° (perpendicularity) or have a difference between 75° and 105°, which is nearly 90°.

In this case, the periphery of the shadow looks black or dark as the light emitted from the polarized light source cannot transmit through. Fig. 2 shows such case.

It means that the angle between the polarization directions of the first polarizing means 81 and the second polarizing means 64 is up to a minimum quantity of light in connection with the light reflected from the polarization shadow projection means 60 after the emission from the polarized light source 80 and incidence on the polarization shadow projection means 60. That is, it can be done by adjusting the relative angle of the second polarizing means 64 or of the first polarizing means 81 and choosing an angle at which the polarization shadow projection means 60 looks the darkest.

If the first polarizing means 81 and the second polarizing means 64 are circular polarization means, one is a left handed circular polarization means and the other is a right handed circular polarization means.

According to the present invention, it is desirable if the polarization direction of the light emitted from the polarized light source 80 and arriving at the second polarizing means 64 and the polarization direction of the second polarizing means 64 have a difference between - 15° and 15°, preferably, have a difference of 0° (parallel).

If the second polarizing means 67 is located on the straight propagation path of the first polarizing means 83, it means that the polarization directions of the first polarizing means 83 and the second polarizing means 67 have a difference of 0° (parallel) or have a difference between - 15° and 15°, which is nearly 0°. In this case, the periphery of the shadow looks bright as the light emitted from the polarized light source transmits through.

It means that the angle between the polarization directions of the first polarizing means 81 and the second polarizing means 64 is up to a maximum quantity of light in connection with the light which is emitted from the polarized light source 80, incident on and reflected from the polarization shadow projection means 60.

That is, it can be done by adjusting the relative angle of the second polarizing means 64 or of the first polarizing means 81 and choosing an angle at which the polarization shadow projection means 60 looks the brightest.

If the first polarizing means 81 and the second polarizing means 64 are circular polarization means, all of them are left handed circular polarization means or right handed circular polarization means.

According to the present invention, if the polarization shadow projection means 60 has the reflection means 67 and the second polarizing means 64 in front surface thereof, the reflection means 67 that exhibits the diffuse reflection is preferable.

According to the present invention, the ornamental or sign member 51 can have a transparent member that has no birefringent property or little birefringent property, and a film member, a sheet member or a plate member that has birefringent property combined with the transparent member. In this case, the light transmitting through such an ornamental or sign member 51 is double-refracted.

According to the present invention, the birefringent medium for the ornamental or sign member 51 can be a cellophane film or a film, sheet or plate made of PP, PET or PP material.

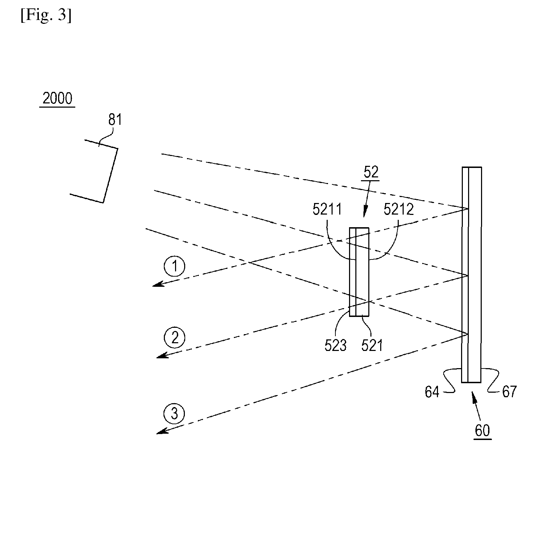

Fig. 3 shows a polarized light display device 2000 according to the second aspect of the present invention.

According to the present invention, a light source 81 for emitting a light is provided and an ornamental or sign member 52 is provided as it is distanced from the light source 81.

The ornamental or sign member 52 is used for ornament or for sign that gives information according to purpose of display as in the first aspect of the present invention. For example, the ornamental or sign member 52 has a shape of pattern or logo or a shape of brand or letter to be used as the ornament or the sign.

The ornamental or sign member 52 may have a plurality of elements. For example, it has a plurality of letters and/or a plurality of logos, which forms the brand. These letters and/or logos or some of them can constitute the ornamental or sign member 52.

The ornamental or sigh member 52 can be arranged in a specific position in a space by holding means, for example, in such a way that it is hung by a string.

According to the present invention, the ornamental or sign member 52 has a birefringent medium 521 including a first side 5211 on which the light from the light source 81 is incident and a second side 5212 through which the light incident on the first side 5211 is transmitted out, and a first polarizing means 523 disposed on the first side 5211 of the birefringent medium 521.

The first side 5211 and the second side 5212 of the birefringent medium 521 can have a curved surface or a plane surface.

According to the present invention, a polarization shadow projection means 60 is provided and it is the same as the polarization shadow projection means 60 provided in the first aspect of the present invention.

The polarization shadow projection means 60 is distanced from the ornamental or sign member 52.

The light that is emitted from the light source 81, transmitted to the first polarizing means 523 of the ornamental or sign member 52 and transmitted out through the second side 5212 of the birefringent medium is illuminated to the polarization shadow projection means 60 and the shadow of the ornamental or sign member 52 by the light of the light source 81 is projected thereon.

Also, the polarization shadow projection means 60 polarizes a light that is directly illuminated thereto from the light source 81 and reflect it to the second side 5212 of the ornamental or sign member 52.

According to the present invention, the shadow of the ornamental or sign member 52 projected on the polarization shadow projection means 60 has a shape of the ornamental or sign member 52 and presents color. The course of the light in this case is indicated by ③ in Fig. 3.

Also, the ornamental or sign member 52 presents color. That is, the color is shown on the first polarizing means 523.

In this case, the course of the light includes a case where the light which is directly illuminated to and reflected by the polarization shadow projection means 60 is transmitted to the second side 5212 of the birefringent medium and transmitted out through the first polarizing means 523 (the course ① in the drawings) and a case where the light which is transmitted through the ornamental or sign member 52 and projected on and reflected by the polarization shadow projection means 60 is transmitted to the second side 5212 and transmitted out through the first polarizing means 523 (the course ② in the drawings). The colors on the first polarizing means 523 are different according to these courses. According to the second aspect of the present invention, the S-shaped ornamental or sign member and the shadow thereof depicted in Fig. 2 all present colors.

According to the second aspect of the present invention, the ornamental or sign member 52 and the shadow thereof constitute display elements and a combination of them can be displayed.

According to the present invention, if the polarization shadow projection means 60 has the reflection means 67 and the second polarizing means 64 in front surface thereof, the reflection means 67 that exhibits the diffuse reflection is preferable.

According to the present invention, the birefringent medium 521 of the ornamental or sign member 52 can have a transparent member that has no birefringent property or little birefringent property, and a film member, a sheet member or a plate member that has birefringent property combined with the transparent member. In this case, the light transmitting through the birefringent medium is double-refracted.

According to the present invention, the birefringent medium 521 for the ornamental or sign member 52 can be a cellophane film or a film, sheet or plate made of PP, PET or PP material.

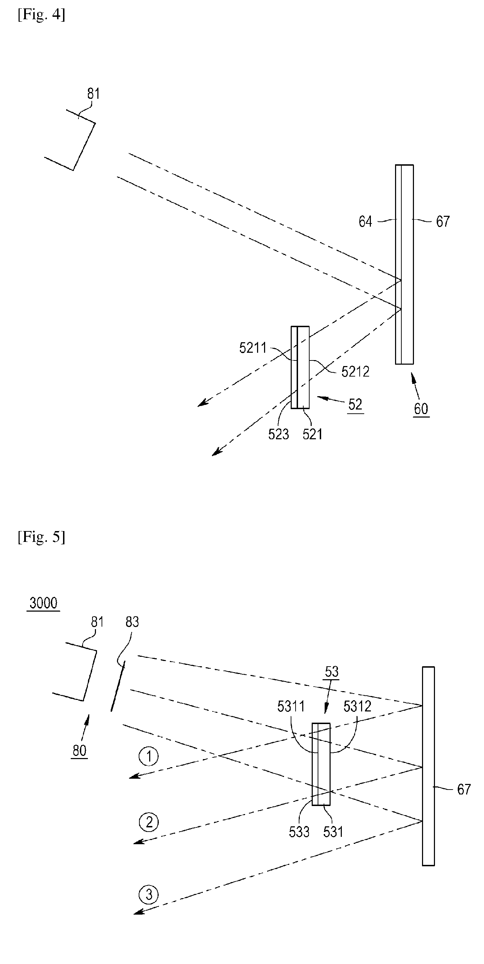

Fig. 4 is a variation of the second aspect of the present invention wherein polarization reflection means 60' that polarizes and reflects an incident light is provided instead of the polarization shadow projection means 60.

It means that the shadow is not formed on the polarization shadow projection means 60 according to the relative position of the polarization shadow projection means 60 with respect to the light source 81.

However, in this case, color is shown on the first polarizing means 523 as the light directly illuminated to and reflected by the polarization reflection means 60'is transmitted to the second side 5212 of the ornamental or sign member 52 and transmitted out.

Fig. 5 shows a polarized light display device using a shadow 3000 according to the third aspect of the present invention.

Firstly, as in the first aspect of the present invention, a polarized light source 80 having a light source 81 and a first polarizing means 83 positioned in front of the light source 81 is provided for emitting a polarized light.

An ornamental or sign member 53 which is positioned to be distanced from the polarized light source 80 is provided.

The ornamental or sign member 53 is used for ornament or for sign that gives information according to purpose of display as in the first aspect of the present invention. For example, the ornamental or sign member 53 has a shape of pattern or logo or a shape of brand or letter to be used as the ornament or the sign.

The ornamental or sign member 53 may have a plurality of elements. For example, it has a plurality of letters and/or a plurality of logos, which forms the brand. These letters and/or logos or some of them can constitute the ornamental or sign member 53.

The ornamental or sigh member 53 can be arranged in a specific position in a space by holding means, for example, in such a way that it is hung by a string.

According to the present invention, the ornamental or sign member 53 has a birefringent medium 531 including a first side 5311 on which the light from the polarized light source 83 is incident and a second side 5312 through which the light incident on the first side 5311 is transmitted out, and a second polarizing means 533 disposed on the first side 5311 of the birefringent medium 531.

The first side 5311 and the second side 5312 of the birefringent medium 531 can have a curved surface or a plane surface.

According to the present invention, a reflection means 67 is provided which reflects a light incident thereon. The reflection means 67 that exhibits diffusion reflection is preferable. The reflection means 67 is distanced from the ornamental or sign member 53.

According to the present invention, the second polarizing means 533 of the ornamental or sign member 53 presents color.

The shadow according to the shape of the ornamental or sign member 53 can be formed on the reflection means 67 and this shadow does not present color. In some cases, the relative position of the reflection means 67 with respect to the polarized light source 80 can be adjusted not to form the shadow.

If the shadow is formed, this shadow can be used for display along with the ornamental or sign member 53 presenting color.

According to the third aspect of the present invention, it is possible to adjust a quantity of light of the light that transmits through the second polarizing means 533 by adjusting the relative polarization directions of the first polarizing means 83 and the second polarizing means 533.

It is desirable if the polarization directions of the light arriving at the second polarizing means 533 after the emission from the polarized light source 80 and of the second polarizing means 533 have a difference between 75° and 105°, preferably, have a difference of 90° (perpendicularity).

If the second polarizing means 533 is located on the straight propagation path of the first polarizing means 83, it means that the polarization directions of the first polarizing means 83 and of the second polarizing means 533 have a difference of 90° (perpendicularity) or have a difference between 75° and 105°, which is nearly 90°.

In this case, the light emitted from the polarized light source 80 cannot transmit through the second polarizing means 533 and the shadow on the reflection means 67 is shown black.

It means that the angle between the polarization directions of the first polarizing means 81 and the second polarizing means 533 is up to a minimum quantity of light in connection with the light that transmits through the second polarizing means 533 emitted from the polarized light source 80. That is, it can be done by adjusting the relative angle of the second polarizing means 533 or of the first polarizing means 81 and choosing an angle at which the shadow on the reflection means 67 looks the darkest.

If the first polarizing means 81 and the second polarizing means 533 are all circular polarization means, one of them is left handed circular polarization means and the other is right handed circular polarization means.

According to the third aspect of the present invention, it is desirable if the polarization directions of the light arriving at the second polarizing means 533 from the polarized light source 80 and of the second polarizing means 533 have a difference between - 15° and 15°, preferably, have a difference of 0° (parallel).

If the second polarizing means 533 is located on the straight propagation path of the first polarizing means 83, it means that the polarization directions of the first polarizing means 83 and the second polarizing means 533 have a difference of 0° (parallel) or have a difference between - 15° and 15°, which is nearly 0°. In this case, the light from the polarized light source 80 almost transmits through the second polarizing means 533 and the shadow on the reflection means 67 is shown pale.

It means that the angle between the polarization directions of the first polarizing means 81 and the second polarizing means 533 is up to a maximum quantity of light in connection with the light that transmits through the second polarizing means 533 emitted from the polarized light source 80. That is, it can be done by adjusting the relative angle of the second polarizing means 533 or of the first polarizing means 81 and choosing an angle at which the shadow on the reflection means 67 looks transparent.

If the first polarizing means 81 and the second polarizing means 533 are circular polarization means, they are all left handed circular polarization means or right handed circular polarization means.

Meanwhile, different colors are presented on the polarizing means 533 of the ornamental or sign member 53 according to the courses (① and ②) of the light in the drawings. That means, a part on the ornamental or sign member 53 according to the course of ① and a part on the ornamental or sign member 53 according to the course ② show different colors each other.

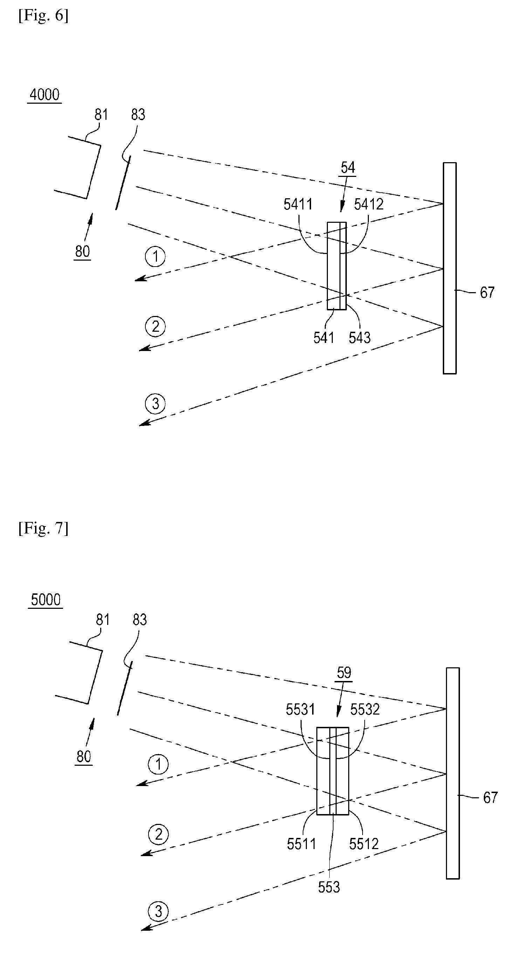

Fig. 6 shows a polarized light display device 4000 according to the fourth aspect of the present invention.

A polarized light source 80 for emitting a polarized light is provided and it has a light source 81 and a first polarizing means 83 positioned in front of the light source 81.

Also, an ornamental or sign member 54 that is distanced from the polarized light source 80 is provided.

The ornamental or sign member 54 is used for ornament or for sign that gives information according to purpose of display as in the first aspect of the present invention. For example, the ornamental or sign member 54 has a shape of pattern or logo or a shape of brand or letter to be used as the ornament or the sign.

The ornamental or sign member 54 may have a plurality of elements. For example, it has a plurality of letters and/or a plurality of logos, which forms the brand. These letters and/or logos or some of them can constitute the ornamental or sign member 54.

The ornamental or sigh member 54 can be arranged in a specific position in a space by holding means, for example, in such a way that it is hung by a string.

According to the present invention, the ornamental or sign member 54 has a birefringent medium 541 including a first side 5411 on which the light from the polarized light source 80 is incident and a second side 5412 through which the light incident on the first side 5411 is transmitted out, and a second polarizing means 543 disposed on the second side 5412 of the birefringent medium 541.

The first side 5411 and the second side 5412 of the birefringent medium 541 can have a curved surface or a plane surface.

According to the present invention, shadow projection means 67 to which a light that is emitted from the polarized light source 80, incident on the first side 5411 of the birefringent medium 541 of the ornamental or sign member 54 and transmitted out through the second polarizing means 543 is illuminated and on which the shadow of the ornamental or sign member 54 caused by the light of the polarized light source 80 is projected is provided.

The shadow projection means 67 is distanced from the ornamental or sign member 54.

The shadow projection means 67 is the same as the reflection means and it is desirable if the diffuse reflection is exhibited, however, not limited thereto.

According to the present invention, the shadow of the ornamental or sign member 54 projected on the shadow projection means 67 shows color and the shadow of the ornamental or sign member 54 which presents color is the object of the display.

The shadow projection means 67 reflects part of the light that is emitted from the polarized light source 80 and directly incident thereon to the second polarizing means 543 of the ornamental or sign member 54.

According to the present invention, not only the shadow of the ornamental or sign member 54 which presents color but also the ornamental or sign member 54 along therewith can be the objects of the display.

According to the fourth aspect of the present invention, it is possible to adjust a quantity of light of the light that transmits through the second polarizing means 543 by adjusting the relative polarization directions of the first polarizing means 83 and the second polarizing means 543.

It is desirable if the polarization directions of the light arriving at the second polarizing means 543 by reflection of the light emitted from polarized light source 80 at the shadow projection means 67 and of the second polarizing means 543 have a difference between 75° and 105°, preferably, have a difference of 90° (perpendicularity).

In this case, the light arriving at the second polarizing means 543 by reflection of the light emitted from polarized light source 80 at the shadow projection means 67 cannot almost transmit through the second polarizing means 543 and a part on the ornamental or sign member 54 according to the light course of ① is shown in black and a part on the ornamental or sign member 54 according to the light course of ② is seen to show the shadow in the rear. The part on the ornamental or sign member 54 according to the light course of ① is the part where the ornamental or sign member 54 is not overlapped with the shadow thereof and the part on the ornamental or sign member 54 according to the light course of ② is the part where the ornamental or sign member 54 is overlapped with the shadow thereof

It means that the angle between the polarization directions of the first polarizing means 81 and the second polarizing means 543 is up to a minimum quantity of light in connection with the light that is emitted from the polarized light source 80, reflected by the shadow projection means 67 and transmits through the second polarizing means 543. That is, it can be done by adjusting the relative angle of the second polarizing means 543 or of the first polarizing means 81 and choosing an angle at which the transmission of the light is the minimum through the part that is not overlapped with the shadow on the ornamental or sign member 543.

If the first polarizing means 81 and the second polarizing means 533 are circular polarization means, they are all left handed circular polarization means or right handed circular polarization means.

It is desirable if the polarization directions of the light arriving at the second polarizing means 543 by reflection of the light emitted from polarized light source 80 at the shadow projection means 67 and of the second polarizing means 543 have a difference between - 15° and 15°, preferably, have a difference of 0° (parallel).

In this case, the light arriving at the second polarizing means 543 by reflection of the light emitted from polarized light source 80 at the shadow projection means 67 almost transmits through the second polarizing means 543 and the part on the ornamental or sign member 54 according to the light course of ① is shown transparent and the part on the ornamental or sign member 54 according to the light course of ② is seen to show the shadow in the rear.

It means that the angle between the polarization directions of the first polarizing means 81 and the second polarizing means 543 is up to a maximum quantity of light in connection with the light that is emitted from the polarized light source 80, reflected by the shadow projection means 67 and transmits through the second polarizing means 543. That is, it can be done by adjusting the relative angle of the second polarizing means 543 or of the first polarizing means 81 and choosing an angle at which the transmission of the light is the maximum through the part that is not overlapped with the shadow on the ornamental or sign member 543.

If the first polarizing means 81 and the second polarizing means 533 are all circular polarization means, one is a left handed circular polarization means and the other is a right handed circular polarization means.

The birefringent medium 541 of the ornamental or sign member 54 can have a transparent member that has no birefringent property or little birefringent property, and a film member, a sheet member or a plate member that has birefringent property combined with the transparent member. In this case, the light transmitting through such a birefringent medium 541 is double-refracted.

According to the present invention, the birefringent medium 541 for the ornamental or sign member can be a cellophane film or a film, sheet or plate made of PP, PET or PP material.

Fig. 7 shows a polarized light display device 5000 according to the fifth aspect of the present invention.

A polarized light source 80 for emitting a polarized light is provided and it has a light source 81 and a first polarizing means 83 positioned in front of the light source 81.

Also, an ornamental or sign member 55 that is distanced from the polarized light source 80 is provided.

The ornamental or sign member 55 is used for ornament or for sign that gives information according to purpose of display as in the first aspect of the present invention. For example, the ornamental or sign member 55 has a shape of pattern or logo or a shape of brand or letter to be used as the ornament or the sign.

The ornamental or sign member 55 may have a plurality of elements. For example, it has a plurality of letters and/or a plurality of logos, which forms the brand. These letters and/or logos or some of them can constitute the ornamental or sign member 55.

The ornamental or sigh member 55 can be arranged in a specific position in a space by holding means, for example, in such a way that it is hung by a string.

According to the present invention, the ornamental or sign member 55 has a second polarizing means 553 including a first side 5531 on which the light from the polarized light source 80 is incident and a second side 5532 through which the light incident on the first side 5411 is transmitted out, a first birefringent medium 5511 disposed on the first side 5531 of the second polarizing means 553 and a second birefringent medium 5512 disposed on the second side 5532 of the second polarizing means 553.

The first side 5531 and the second side 5532 of the second polarizing means 553 can have a curved surface or a plane surface.

According to the present invention, shadow projection means 67 is provided. A light that is emitted from the polarized light source 80, incident on the first birefringent medium 5511 of the ornamental or sign member 55 and transmitted out through the second birefringent medium 5512 is illuminated to the shadow projection means 67 so that the shadow of the ornamental or sign member 54 is projected on the shadow projection means.

The shadow projection means 67 is the same as the reflection means described above and it is desirable if the shadow projection means 67 exhibits the diffuse reflection, however, not limited thereto.

The shadow projection means 67 is positioned to be distanced from the ornamental or sign member 55.

The shadow of the ornamental or sign member 55 projected on the shadow projection means 67 presents color and the second polarizing means 553 of the ornamental or sign member 55 presents color. Display object according to the present invention includes a combination of the ornamental or sign member 55 and the shadow thereof, all which present colors.

The birefringent media 5531 and 5532 of the ornamental or sign member 55 can have a transparent member that has no birefringent property or little birefringent property, and a film member, a sheet member or a plate member that has birefringent property combined with the transparent member. According to the present invention, the birefringent media 5531 and 5532 for the ornamental or sign member 55 can be a cellophane film or a film, sheet or plate made of PP, PET or PP material.

In this case, a part on the ornamental or sign member 55 according to the light course ① and a part on the ornamental or sign member 55 according to the light course ② are different from each other and they present different colors due to their different light courses. The light course ③ is the course by which a shadow is shown. The part according to the light course of ① is the part where the ornamental or sign member 55 is not overlapped with the shadow thereof and the part according to the light course of ② is the part where the ornamental or sign member 55 is overlapped with the shadow thereof. The color on the part where the ornamental or sign member 55 is not overlapped with the shadow thereof and the color on the part where the ornamental or sign member 55 is overlapped with the shadow thereof are different from each other and the color of the shadow in the rear is different.

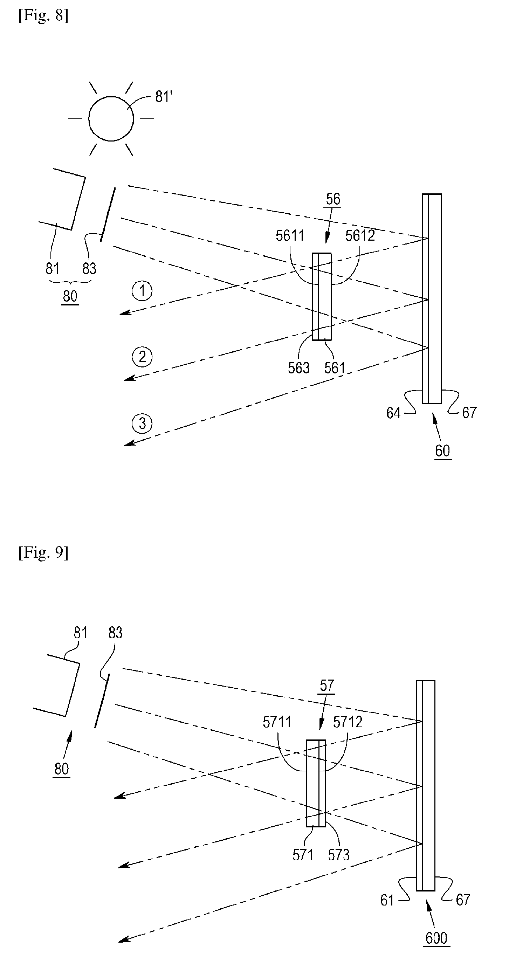

Fig. 8 shows a polarized light display device using a shadow 6000 according to the sixth aspect of the present invention.

Firstly, a polarized light source 80 having a light source 81 and a first polarizing means 83 positioned in front of the light source 81 is provided for emitting a polarized light.

Also, another light source 18'provided when the light source 80 is turned off is provided. It is desirable if it is a natural light as described below.

An ornamental or sign member 56 positioned to be distanced from the polarized light source 80 and the light source 18'is provided.

The ornamental or sign member 56 is used for ornament or for sign that gives information according to purpose of display as in the first aspect of the present invention. For example, the ornamental or sign member 56 has a shape of pattern or logo or a shape of brand or letter to be used as the ornament or the sign.

The ornamental or sign member 56 may have a plurality of elements. For example, it has a plurality of letters and/or a plurality of logos, which forms the brand. These letters and/or logos or some of them can constitute the ornamental or sign member 56.

The ornamental or sigh member 56 can be arranged in a specific position in a space by holding means, for example, in such a way that it is hung by a string.

According to the present invention, the ornamental or sign member 56 has a birefringent medium 561 including a first side 5611 on which the light from the polarized light source 80 or the light source 801' is incident and a second side 5612 through which the light incident on the first side 5611 is transmitted out, and a second polarizing means 563 disposed on the first side 5611 of the birefringent medium 561.

The first side 5611 and the second side 5612 of the birefringent medium 561 can have a curved surface or a plane surface.

According to the present invention, polarization shadow projection means 60 is provided and it is the same as the polarization shadow projection means described in the earlier embodiments. In the present embodiment, a reflection means 67 is provided and a third polarizing means 64 is disposed on the front surface of the reflection means 67.

The polarization shadow projection means 60 is positioned to be distanced from the ornamental or sign member 56.

In this case, if the polarized light source 80 is turned off, the display is performed by the light source 81'and it is the same as the display according to the second aspect of the present invention.

Accordingly, according to the fifth aspect of the present invention, the display effect by the polarized light source 80 is used in the night. In the day time, the polarized light source 80 is turned off and the display effect by the light source 81'which is the natural light is used so that the same display is performed according to the second aspect of the present invention. The display effect by the polarized light source 80 is explained below.

In this case, the light that is emitted from the polarized light source 80, transmitted to the second polarizing means 563 of the ornamental or sign member 56 and transmitted out through the second side 5612 is illuminated to the polarization shadow projection means 60 so that the shadow of the ornamental or sign member 56 caused by the polarized light source 80 is projected on the polarization shadow projection means 60.

Also, the polarization shadow projection means 60 polarizes and reflects part of the light directly illuminated thereto from the polarized light source 80 to the second side 5612 of the ornamental or sign member 56.

According to the present invention, the shadow of the ornamental or sign member 56 projected on the polarization shadow projection means 60 has a shape of the ornamental or sign member and presents color. The light course in this case is indicated by ③ in the drawings.

Also, the ornamental or sign member 56 presents color. The color is shown on the second polarizing means 563.

The course of the light in this case includes a case where the light directly illuminated to and reflected by the polarization shadow projection means 60 is transmitted to the second side 5612 and transmitted out through the second polarizing means 563 (the course ① in the drawings) and a case where the light which is transmitted through the ornamental or sign member 56 and projected on and reflected by the polarization shadow projection means 60 is transmitted to the second side 5612 and transmitted out through the first polarizing means 563 (the course ② in the drawings). The colors on the second polarizing means 563 are different according to these courses.

According to the sixth aspect of the present invention, the ornamental or sign member 55 and the shadow thereof are the display elements and a combination thereof will be displayed.

According to the sixth aspect of the present invention, various effects can be obtained by adjusting the relative polarization directions of the first polarizing means 83, the second polarizing means 563 and the third polarizing means 64. That is, the adjustment of the relative polarization directions of the first polarizing means 83, the second polarizing means 563 and the third polarizing means 64 results in the various different display effects. According to the present invention, the birefringent medium 561 of the ornamental or sign member 562 can have a transparent member that has no birefringent property or little birefringent property, and a film member, a sheet member or a plate member that has birefringent property combined with the transparent member.

According to the present invention, the birefringent medium 561 for the ornamental or sign member 56 can be a cellophane film or a film, sheet or plate made of PP, PET or PP material.

Fig. 9 shows a polarized light display device using a shadow 7000 according to the seventh aspect of the present invention.

Firstly, a polarized light source 80 having a light source 81 and a first polarizing means 83 positioned in front of the light source 81 is provided for emitting a polarized light.

Also, the ornamental or sign member 57 is positioned to be distanced from the polarized light source 80.

According to the present invention, the ornamental or sign member 57 has a birefringent medium 571 including a first side 5711 on which the light from the polarized light source 80 is incident and a second side 5712 through which the light incident on the first side 5711 is transmitted out, and a second polarizing means 573 disposed on the second side 5712 of the birefringent medium 561.

The first side 5711 and the second side 5712 of the birefringent medium 571 can have a curved surface or a plane surface.

According to the present invention, shadow projection means 600 is provided and it has reflection means 67 and a second birefringent medium 61 disposed on the front surface of the reflection means 67.

It is preferable if the reflection means 67 exhibits the diffusion reflection as described earlier.

The shadow projection means 600 is positioned to be distanced from the ornamental or sign member 57.

The light that is emitted from the polarized light source 80, transmitted to the first side 5711 of the ornamental or sign member 57 and transmitted out through the second polarizing means 573 is illuminated to the shadow projection means 60 so that the shadow of the ornamental or sign member 57 caused by the polarized light source 80 is projected on the shadow projection means 600.

Also, the shadow projection means 600 reflects part of the light which is emitted from the polarized light source 80 and directly illuminated thereto into the second polarizing means 573 of the ornamental or sign member 57.

According to the present invention, the shadow of the ornamental or sign member 57 projected on the shadow projection means 600 presents color and the second polarizing means 573 of the ornamental or sign member 57 presents color. A combination of the ornamental or sign member 57 and the shadow of the ornamental or sign member 57 becomes object of display.

According to the seventh aspect of the present invention, the ornamental or sign member 57 has the first birefringent medium 571 and the shadow projection means 600 has the second birefringent medium 61.

Accordingly, the light that is emitted from the polarized light source 80 and transmitted through the first birefringent medium 571 and the second polarizing means 573 is projected on the shadow projection means 600 and the shadow of the ornamental or sign member 57 presenting color is formed. Also, the light that is emitted from the polarized light source 80 and reflected by the shadow projection means 600 through the second birefringent medium 61 is transmitted through the second polarizing means 573 of the ornamental or sign member 57 and the second polarizing means 573 of the ornamental or sign member 57 presents color.

According to the present invention, moving means can be provided for moving the ornamental or sign members 51, 52, 53, 54, 55, 56 and 57.

For example, the ornamental or sign members 51, 52, 53, 54, 55, 56 and 57 are connected to power means such as motors so that they can move in a various ways that they rotate with respect to an arbitrary axis or swing etc. In case that they rotate, for example, they rotate from side to side or rotate with the axis of the propagation direction of the light of the light source.

In this case, the shadows of the ornamental or sign members 51, 52, 53, 54, 55, 56 and 57 presenting colors change their colors. These are because the characteristics of the birefringent media of the ornamental or sign members 51, 52, 53, 54, 55, 56 and 57 are changed according to the course of the light. In this case, the shadows of the moving ornamental or sign members also move. That is, unique display effect that the shadow is moving and its color is changing is produced.

If the ornamental or sign members 51, 52, 53, 54, 55, 56 and 57 present colors, the colors of the ornamental or sign members 51, 52, 53, 54, 55, 56 and 57 also change.

As described, the present invention provides the polarized light display device using a shadow where the ornamental or sign member is provided to produce the shadow of the ornamental or sign member and the shadow of the ornamental or sign member presents color regardless of the color property of the light source or the ornamental or sign member and the ornamental or sign member presents color regardless of the color property of the light source.

## Claims

1. A polarized light display device comprising:
(a) a polarized light source having a light source and a first polarizing means positioned in front of the light source, so that a polarized light is emitted from the polarized light source;
(b) an ornamental or sign member positioned to be distanced from the polarized light source, receiving and transmitting the light emitted from the polarized light source through the ornamental or sign member, and double-refracting the light being transmitted through the ornamental or sign member;
(c) polarization shadow projection means that is positioned to be behind of and distanced from the ornamental or sign member along propagation direction of the light emitted from the polarized light source so that a shadow of the ornamental or sign member is formed on the polarization shadow projection means, and reflects and polarizes an incident light; wherein,
(d1) the shadow of the ornamental or sign member formed on the polarization shadow projection means presents color, and
(d2) display object includes the shadow of the ornamental or sign member presenting color.

2. A polarized light display device as claimed in claim 1 wherein the polarization shadow projection means has reflection means on which a shadow is formed and a second polarizing means disposed on the reflection means.

3. A polarized light display device as claimed in claim 2 wherein the second polarizing means is attached to reflection surface of the reflection means.

4. A polarized light display device as claimed in claim 3 wherein polarization directions of the light arriving at the second polarizing means after the emission from the polarized light source and of the second polarizing means have a difference between 75° and 105°, preferably, have a difference of 90° (perpendicularity) or the polarization directions of the light arriving at the second polarizing means after the emission from the polarized light source and of the second polarizing means have a difference between - 15° and 15°, preferably, have a difference of 0° (parallel)

5. A polarized light display device as claimed in claim 3 wherein the first polarizing means and the second polarizing means are all linear polarizing means and the relative angle between the polarization directions of the first polarizing means and the second polarizing means is up to a minimum quantity of light or a maximum quantity of light in connection with the light reflected from the polarization shadow projection means after the emission from the polarized light source and the incidence on the polarization shadow projection means.

6. A polarized light display device as claimed in claim 3 wherein the first polarizing means and the second polarizing means are all circular polarization means.

7. A polarized light display device as claimed in claims 2 to 6 wherein the reflection means exhibits diffuse reflection.

8. A polarized light display device as claimed in claims 1 to 6 wherein the ornamental or sign member has a transparent member that has no birefringent property or little birefringent property, and a film member, a sheet member or a plate member that has birefringent property combined with the transparent member.

9. A polarized light display device as claimed in claims 1 to 6 wherein the birefringent medium of the ornamental or sign member is a cellophane film or a film, sheet or plate made of PP, PET or PP material.

10. A polarized light display device as claimed in claims 1 to 6 further comprising moving means for moving the ornamental or sign member.

11. A polarized light display device comprising:
(a) a light source;
(b) an ornamental or sign member positioned to be distanced from the light source; wherein the ornamental or sign member has a birefringent medium having a first side receiving a light emitted from the light source and a second side through which the light received by the first side is transmitted out, and a first polarizing means disposed on the first side of the birefringent medium and the first and the second sides of the birefringent medium can be a curved surface or a plane,
(c) polarization shadow projection means to which the light emitted from the light source, transmitted to the first polarizing means of the ornamental or sign member and transmitted out through the second side of the ornamental or sign member is transmitted, which is positioned to be distanced from the ornamental or sign member, on which a shadow of the ornamental or sign member caused by the light of the light source is projected, which polarizes and reflects an incident light, and which polarizes and reflects part of the light emitted from the light source and directly illuminated thereto into the second side of the ornamental or sign member; wherein,
(d1) the shadow of the ornamental or sign member projected on the polarization shadow projection means and the first polarizing means of the ornamental or sign member present colors;
(d2) display object includes a combination of the ornamental or sign member and the shadow of the ornamental or sign member projected on the polarization shadow projection means.

12. A polarized light display device as claimed in claim 11 wherein the polarization shadow projection means has reflection means on which the shadow is formed and a second polarizing means disposed on a front surface of the reflection means.

13. A polarized light display device as claimed in claim 12 wherein the second polarizing means is attached to reflection surface of the reflection means.

14. A polarized light display device as claimed in claims 11 to 13 wherein the reflection means exhibits diffuse reflection.

15. A polarized light display device as claimed in claims 11 to 13 further comprising moving means for moving the ornamental or sign member.

16. A polarized light display device comprising:
(a) a light source;
(b) an ornamental or sign member positioned to be distanced from the light source; wherein the ornamental or sign member has a birefringent medium having a first side receiving a light emitted from the light source and a second side through which the light received by the first side is transmitted out and a first polarizing means disposed on the first side of the birefringent medium and the first and the second sides of the birefringent medium can be a curved surface or a plane,
(c) polarization reflection means positioned to be distanced from the ornamental or sign member and reflecting and polarizing an incident light; wherein the polarization reflection means reflects and polarizes part of the light that is emitted from the light source and directly illuminated thereto into the second side of the birefringent medium of the ornamental or sign member, wherein,
(d1) the first polarizing means of the ornamental or sign member present color, and
(d2) display object includes the ornamental or sign member.

17. A polarized light display device as claimed in claim 16 wherein the polarization reflection means has reflection means totally or partially reflecting an incident light and a second polarizing means disposed on front surface of the reflection means.

18. A polarized light display device as claimed in claim 17 wherein the second polarizing means is attached to reflection surface of the reflection means.

19. A polarized light display device as claimed in claims 16 to 18 further comprising moving means for moving the ornamental or sign member.

20. A polarized light display device comprising:
(a) a polarized light source having a light source and a first polarizing means positioned in front of the light source, so that a polarized light is emitted from the polarized light source;
(b) an ornamental or sign member positioned to be distanced from the polarized light source; wherein the ornamental or sign member has a birefringent medium having a first side receiving a light emitted from the polarized light source and a second side through which the light received by the first side is transmitted out, and a second polarizing means disposed on the first side of the birefringent medium, and the first and the second sides of the birefringent medium can be a curved surface or a plane,
(c) reflection means positioned to be distanced from the ornamental or sign member and reflecting an incident light; wherein the reflection means reflects a light emitted from the polarized light source and directly illuminated thereto to the second side of the birefringent medium of the ornamental or sign member, wherein,
(d) the second polarizing means of the ornamental or sign member presents color, and,
(e) display object includes the ornamental or sign member having the color provided by the color presented at the second polarizing means.

21. A polarized light display device as claimed in claim 21 wherein the reflection means is positioned behind of the ornamental or sign member along propagation direction of the light emitted from the polarized light source and on which a shadow of the ornamental or sign member caused by the light emitted from the polarized light source is projected, and the display object includes a combination of the ornamental or sign member and the shadow of the ornamental or sign member.

22. A polarized light display device as claimed in claim 20 or 21 wherein the reflection means exhibits diffuse reflection.

23. A polarized light display device as claimed in claim 20 or 21 wherein polarization directions of the light arriving at the second polarizing means after the emission from the polarized light source and of the second polarizing means have a difference between 75° and 105°, preferably, have a difference of 90° (perpendicularity) or the polarization directions of the light arriving at the second polarizing means after the emission from the polarized light source and of the second polarizing means have a difference between - 15° and 15°, preferably, have a difference of 0° (parallel)

24. A polarized light display device as claimed in claim 20 or 21 wherein the first polarizing means and the second polarizing means are all linear polarizing means and the relative angle between the polarization directions of the first polarizing means and the second polarizing means is up to a minimum quantity of light or a maximum quantity of light in connection with the light reflected from the polarization shadow projection means after the emission from the polarized light source and the incidence on the polarization shadow projection means.

25. A polarized light display device as claimed in claim 20 or 21 wherein the first polarizing means and the second polarizing means are circular polarizing means.

26. A polarized light display device as claimed in claims 20 to 21 further comprising moving means for moving the ornamental or sign member.

27. A polarized light display device comprising:
(a) a polarized light source having a light source and a first polarizing means positioned in front of the light source, so that a polarized light is emitted from the polarized light source;
(b) an ornamental or sign member positioned to be distanced from the polarized light source; wherein the ornamental or sign member has a birefringent medium having a first side receiving a light emitted from the polarized light source and a second side through which the light received by the first side is transmitted out and a second polarizing means disposed on the second side of the birefringent medium, and the first and the second sides of the birefringent medium can be a curved surface or a plane,
(c) shadow projection means positioned to be distanced from the ornamental or sign member and to which the light emitted from the polarized light source, transmitted to the first side of the ornamental or sign member and transmitted through the second polarizing means is transmitted so that a shadow of the ornamental or sign member caused by the light of the polarized light source is formed thereon; wherein,
(d) the shadow of the ornamental or sign member formed on the shadow projection means presents color, and,
(e) display object includes the shadow of the ornamental or sign member presenting the color.

28. A polarized light display device as claimed in claim 27 wherein the shadow projection means reflects an incident light and it reflects part of a light directly illuminated to the shadow projection means from the polarized light source to the second polarizing means of the ornamental or sign member, and the display object includes a combination of the ornamental or sign member and the shadow of the ornamental or sign member.

29. A polarized light display device as claimed in claim 27 or 28 wherein the shadow projection means exhibits diffuse reflection.

30. A polarized light display device as claimed in claim 28 wherein polarization directions of the light arriving at the second polarizing means reflected by the shadow projection means from the polarized light source and of the second polarizing means have a difference between 75° and 105°, preferably, have a difference of 90° (perpendicularity) or the polarization directions of the light arriving at the second polarizing means reflected by the shadow projection means from the polarized light source and of the second polarizing means have a difference between -15° and 15°, preferably, have a difference of 0° (parallel)

31. A polarized light display device as claimed in claim 28 wherein the first polarizing means and the second polarizing means are circular polarizing means.

32. A polarized light display device as claimed in claims 27 to 28 further comprising moving means for moving the ornamental or sign member.

33. A polarized light display device comprising:
(a) a polarized light source having a light source and a first polarizing means positioned in front of the light source, so that a polarized light is emitted from the polarized light source;
(b) an ornamental or sign member positioned to be distanced from the polarized light source; wherein the ornamental or sign member has a second polarizing means having a first side receiving the light emitted from the polarized light source and a second side through which the light received by the first side is transmitted out, a first birefringent medium disposed on the first side of the second polarizing means, and a second birefringent medium disposed on the second side of the second polarizing means, and the first and the second sides of the birefringent media can be a curved surface or a plane,
(c) shadow projection means which is positioned to be distanced from the ornamental or sign member, to which the light emitted from the polarized light source, transmitted to the first birefringent medium of the ornamental or sign member and transmitted out through the second polarizing means and the second birefringent medium is transmitted so that a shadow of the ornamental or sign member caused by the polarized light source is projected thereon, which reflects an incident light, and which reflects part of the light emitted from the polarized light source and directly illuminated thereto into the second birefringent medium of the ornamental or sign member; wherein,
(d) the shadow of the ornamental or sign member projected on the shadow projection means and the second polarizing means of the ornamental or sign member present colors, and,
(e) display object includes a combination of the ornamental or sign member and the shadow of the ornamental or sign member.

34. A polarized light display device as claimed in claim 33 wherein reflection surface of the shadow projection means exhibits diffuse reflection.

35. A polarized light display device as claimed in claims 33 to 34 further comprising moving means for moving the ornamental or sign member.

36. A polarized light display device comprising:
(a) a polarized light source having a first light source and a first polarizing means positioned in front of the light source, so that a polarized light is emitted from the polarized light source;
(b) a second light source provided when the polarized light source is turned off;
(c) an ornamental or sign member positioned to be distanced from the polarized light source and the second light source; wherein, the ornamental or sign member has a birefringent medium having a first side receiving the light from the polarized light source or the second light source and a second side through which the light received by the first side is transmitted out and a second polarizing means disposed on the first side of the birefringent medium, and the first and second sides of the birefringent medium can be a curved surface or a plane,
(d) Polarization shadow projection means which is positioned to be distanced from the ornamental or sign member behind of the ornamental or sign member along propagation direction of the light from the polarized light source or the second light so that a shadow of the ornamental or sign member caused by the light from the polarized light source or the second light is projected thereon, which reflects and polarizes an incident light and which reflects part of the light illuminated thereto from the polarized light source or the second light to be polarized and directed into the second side of the birefringent medium of the ornamental or sign member, wherein,
(e1) the shadow of the ornamental or sign member and the second polarizing means of the ornamental or sign member present colors, and
(e2) display object includes a combination of the ornamental or sign member and the shadow of the ornamental or sign member.

37. A polarized light display device as claimed in claim 36 wherein the second light source is a natural light.

38. A polarized light display device as claimed in claim 36 or 37 wherein the polarization shadow projection means has reflection means on which the shadow is formed and a third polarizing means on front surface of the reflection means.

39. A polarized light display device as claimed in claim 38 wherein the third polarizing means is attached to reflection surface of the reflection means.

40. A polarized light display device as claimed in claim 39 wherein the reflection means exhibits diffuse reflection.

41. A polarized light display device as claimed in claims 36 to 40 further comprising moving means for moving the ornamental or sign member.

42. A polarized light display device comprising:
(a) a polarized light source having a light source and a first polarizing means positioned in front of the light source, so that a polarized light is emitted from the polarized light source;
(b) an ornamental or sign member positioned to be distanced from the polarized light source; wherein, the ornamental or sign member has a first birefringent medium having a first side receiving the light from the polarized light source and a second side through which the light received by the first side is transmitted out, and a second polarizing means disposed on the second side of the first birefringent medium, and the first and second sides of the first birefringent medium can be a curved surface or a plane,
(c) shadow projection means which is positioned to be distanced from the ornamental or sign member, to which the light emitted from the polarized light source, transmitted to the first side of the ornamental or sign member and transmitted out through the second polarizing means is transmitted so that a shadow of the ornamental or sign member caused by the polarized light source is projected thereon, which reflects part of the light emitted from the polarized light source and directly illuminated thereto into the second polarizing means of the ornamental or sign member, and which has a reflection means and a second birefringent medium disposed on front surface of the reflection means; wherein,
(d) the shadow of the ornamental or sign member projected on the shadow projection means and the second polarizing means of the ornamental or sign member present colors, and,
(e) display object includes a combination of the ornamental or sign member and the shadow of the ornamental or sign member.

43. A polarized light display device as claimed in claim 42 further comprising moving means for moving the ornamental or sign member.

44. A polarized light display device comprising:
(a) a polarized light source having a light source and a first polarizing means positioned in front of the light source, so that a polarized light is emitted from the polarized light source;
(b) an ornamental or sign member positioned to be distanced from the polarized light source, receiving and transmitting out the polarized light from the polarized light source therethrough and double-reflecting the light being transmitted therethrough;
(c) shadow projection means positioned to be distanced from the ornamental or sign member, on which a shadow of the ornamental or sign member caused by the light from the polarized light source is projected and which reflects an incident light;
(d) a second polarizing means positioned between the ornamental or sign member and the reflection means along propagation direction of the light from the polarized light source; wherein,
(d1) the shadow of the ornamental or sign member projected on the shadow projection means presents color, and,
(d2) display object includes the shadow of the ornamental or sign member presenting color.

45. A polarized light display device as claimed in claim 44 wherein the second polarizing means is attached to the ornamental or sign member or to the shadow projection means.
